# EUROPEAN PATENT APPLICATION

(11) **EP 3 293 277 A1**
(43) Date of publication of application: **14.03.2018**
(21) Application number: 17189041.1
(22) Date of filing: 01.09.2017
(51) Int. Cl.: C22C 19/07, F01L 3/04

(54) **COBALT-BASED CLADDING ALLOY FOR ENGINE VALVE AND ENGINE**

(30) Priority: 08.09.2016 JP 2016175665
(71) Applicant: TOYOTA JIDOSHA KABUSHIKI KAISHA, Toyota-shi, Aichi-ken, 471-8571 (JP)
(72) Inventor: KAMO, Yuki, Aichi-ken,, 471-8571 (JP); ANDO, Kimihiko, Aichi-ken,, 471-8571 (JP); SHINOHARA, Nobuyuki, Aichi-ken,, 471-8571 (JP)
(74) Representative: Kuhnen & Wacker

(57) **Abstract**

A cobalt-based cladding alloy for an engine valve (10) includes, by mass%: Cr: 13% to 35%; Mo: 5% to 30%; Si: 0.1% to 3.0%; C: 0.04% or less; Ni: 15% or less; W: 9% or less; Fe: 30% or less; Mn: 3% or less; S: 0.4% or less; and Co and inevitable impurity elements as a remainder. The amount of Co is 30% or more.

## Description

### BACKGROUND OF THE INVENTION

### 1. Field of the Invention

The present invention relates to a cobalt-based cladding alloy for an engine valve, and an engine provided with an engine valve on which a cladding material made of the cobalt-based cladding alloy is deposited.

### 2. Description of Related Art

A cobalt-based cladding alloy excellent in corrosion resistance and wear resistance is employed by a valve face of an engine valve.

For example, Japanese Patent Application Publication No. 5-84592 (JP 5-84592 A) discloses a cobalt-based cladding alloy consisting of, by parts by weight, Cr: 10% to 40%, Mo: more than 10% to 30%, W: 1% to 20%, Si: 0.5% to 5%, C: 0.05% to 3%, Al: 0.001% to 0.12%, O: 0.001% to 0.1%, Fe: 30% or less, Ni: 20% or less, Mn: 3% or less, and Co and inevitable impurity elements as the remainder (here, the amount of Co is 30 wt% to 70 wt%).

### SUMMARY OF THE INVENTION

According to the cobalt-based cladding alloy described in JP 5-84592 A, since Fe is contained in an amount of 30% or less, the toughness is improved, oxides are formed, and the effect as a lubricant is exhibited. Cr, Mo, and W contained therein causes solid solution strengthening of the Co-rich matrix, and by regulating the O content by adding Al, the cladding properties can be improved. In addition, since the valve face of the engine valve operated under a high load is cladded, the wear resistance of the engine valve is improved, and the low attackability is simultaneously achieved, thereby achieving a cobalt-based cladding alloy excellent in cladding properties.

However, for the purpose of reducing an environmental impact load, ethanol, ethanol-blended gasoline, compressed natural gas (CNG), liquefied petroleum gas (LPG) and the like are applied as the fuel engine. A vehicle using ethanol and ethanol-blended gasoline as the fuel is called a flexible-fuel vehicle (FFV).

When the ethanol-blended gasoline and the like are used, it is possible to reduce the environmental impact load. However, a severe corrosive environment or adhesive environment is formed compared to gasoline of the related art, and thus there is concern of excessive wear on a valve seat. Therefore, even with an engine provided with an engine valve having the cobalt-based cladding alloy described in JP 5-84592 A, that has excellent performance, it is difficult for the engine to exhibit high corrosion resistance and adhesion resistance compared to the case of using ethanol-blended gasoline and the like.

The present invention provides a cobalt-based cladding alloy for an engine valve capable of exhibiting high corrosion resistance and adhesion resistance even in a case where ethanol-blended gasoline or the like is used, and an engine provided with an engine valve on which a cladding material made of the cobalt-based cladding alloy is deposited.

According to a first aspect of the present invention, a cobalt-based cladding alloy for an engine valve includes, by mass%: Cr: 13% to 35%; Mo: 5% to 30%; Si: 0.1% to 3.0%; C: 0.04% or less; Ni: 15% or less; W: 9% or less; Fe: 30% or less; Mn: 3% or less; S: 0.4% or less; and Co and inevitable impurity elements as a remainder (here, the amount of Co is 30% or more).

While the amount of C in the cobalt-based cladding alloy described in JP 5-84592 A is 0.05 mass% to 3 mass%, the amount of C in the cobalt-based cladding alloy for an engine valve according to the aspect of the present invention is 0.04 mass% or less. In this respect, the two sides are significantly different from each other.

That is, since the amount of C in the cobalt-based cladding alloy described in JP 5-84592 A is 0.05 mass% or more, hard carbide phases are likely to be generated, and as the amount of the carbide phases increases, there is a concern that the attackability may increase. An excessive increase in the attackability of the clad metal affects an increase in wear of the opponent valve seat.

In addition, due to the generation of the carbides, the amount of solid solutions of Cr and Mo decreases, and there is a concern that the adhesion resistance or corrosion resistance may decrease.

Contrary to this, since the amount of C in the cobalt-based cladding alloy according to the aspect of the present invention is 0.04 mass% or less, the attackability can be reduced, and thus it becomes possible to suppress wear of the opponent valve seat.

In addition, since the amount of C is small, the generation of carbides is suppressed, and thus a reduction in the amount of solid solutions of Cr and Mo is suppressed, resulting in a cobalt-based cladding alloy provided with high corrosion resistance and adhesion resistance.

As described above, the difference in the amount of C is extremely important, and in a case where the above-mentioned ethanol-blended gasoline or the like is used, the difference in effect due to the difference in the amount of C becomes more significant.

According to a second aspect of the present invention, an engine includes: an engine valve on which a cladding material made of the cobalt-based cladding alloy is deposited. A fuel for the engine is any one of ethanol, ethanol-blended gasoline, compressed natural gas (CNG), and liquefied petroleum gas (LPG).

Since the engine according to the second aspect of the present invention is provided with the engine valve on which the cladding material made of the cobalt-based cladding alloy in which the amount of C is set to 0.04 mass% or less is deposited, wear of the opponent valve seat of the engine valve is suppressed, resulting in an engine having high durability.

As can be understood from the above description, according to the cobalt-based cladding alloy for an engine valve according to the second aspect of the present invention, since the amount of C is set to 0.04 mass% or less, the attackability is reduced, and the generation of hard carbides is suppressed. Therefore, a cobalt-based cladding alloy provided with high corrosion resistance and adhesion resistance can be obtained, and wear of the opponent valve seat can be suppressed.

In addition, it is possible to provide an engine that is highly durable even in a severe corrosive environment or adhesive environment due to the use of ethanol, ethanol-blended gasoline, CNG, LPG, or the like as a fuel.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a longitudinal sectional view of an engine valve having a clad portion made of a cobalt-based cladding alloy according to an embodiment of the present invention;
FIG. 2 is a view showing the results of a wear test, and is a view particularly showing the relationship between the total wear amount of the engine valve and a valve seat and the amount of C in the cobalt-based cladding alloy;
FIG. 3 is an enlarged view of a range in which the amount of C is 0 mass% to 0.05 mass% in FIG. 2; and
FIG. 4 is an SEM image of an example and a reference example before and after a corrosion test.

### DETAILED DESCRIPTION OF EMBODIMENTS

Hereinafter, an embodiment of a cobalt-based cladding alloy for an engine valve according to an embodiment of the present invention will be described with reference to the drawings.

### (Embodiment of Cobalt-Based Cladding Alloy for Engine Valve)

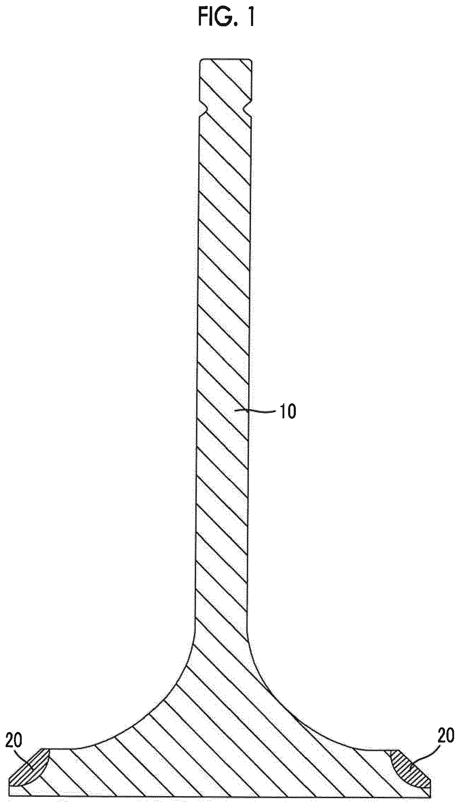

FIG. 1 is a longitudinal sectional view of an engine valve having a clad portion made of the cobalt-based cladding alloy according to the embodiment of the present invention. As illustrated in the figure, a clad portion 20 made of the cobalt-based cladding alloy is annularly formed on the valve face of an engine valve 10, and a valve seat (not illustrated) is disposed on the opponent side on which the clad portion 20 abuts at a high pressure when the engine valve 10 is mounted on a cylinder head.

Here, the cobalt-based cladding alloy consists of, by mass%: Cr: 13% to 35%; Mo: 5% to 30%; Si: 0.1% to 3.0%; C: 0.04% or less; Ni: 15% or less; W: 9% or less; Fe: 30% or less; Mn: 3% or less; S: 0.4% or less; and Co and inevitable impurity elements as the remainder (here, the amount of Co is 30% or more).

Since an appropriate amount of Mo is added to the alloy that forms a Cr passive film, regeneration of the Cr passive film can be promoted. Therefore, even when the Cr passive film is broken due to corrosion or sliding of the clad portion 20, the speed of the regeneration of the Cr passive film by Cr and Mo exceeds the speed of the breakage, resulting in a cobalt-based cladding alloy having high corrosion resistance and adhesion resistance even in a repeatedly sliding and highly corrosive environment.

The reasons for the numerical range of each metal element will be described below in detail.

### Cr: 13 mass% to 35 mass%

When Cr is in an amount of less than 13 mass%, a passive oxide film is not formed and corrosion resistance is not exhibited. Therefore, the lower limit of the amount of Cr is defined as 13 mass%. When the amount of Cr exceeds 35 mass%, the cladding properties deteriorate. Therefore, the upper limit of the amount of Cr is defined as 35 mass%.

### Mo: 5 mass% to 30 mass%

When the amount of Mo is less than 5% by mass, the effect of improving the corrosion resistance is insufficient. Therefore, the lower limit of the amount of Mo is defined as 5 mass%. When the amount of Mo exceeds 30 mass%, the cladding properties deteriorate. Therefore, the upper limit of the amount of Mo is defined as 30 mass%.

### Si: 0.1 mass% to 3.0 mass%

When the amount of Si is less than 0.1 mass%, the cladding properties (wettability) deteriorate. Therefore, the lower limit of the amount of Si is defined as 0.1 mass%. When the amount of Si exceeds 3.0 mass%, the attackability increases. Therefore, the upper limit of the amount of Si is defined as 3.0 mass%.

### C: 0.04 mass% or Less

When the amount of C exceeds 0.04 mass%, the corrosion resistance decreases and a eutectic structure having low corrosion resistance is formed, resulting in corrosion. Therefore, the attackability against the valve seat increases. In addition, the amount of solid solutions of Cr and Mo decreases, resulting in a decrease in the corrosion resistance. Therefore, the upper limit of the amount of C is defined as 0.04 mass%.

### Ni: 15 mass% or Less

Ni is an element that contributes to the improvement in the toughness and corrosion resistance of the clad metal. When the amount of Ni exceeds 15 mass%, the wear resistance decreases, and the cladding properties deteriorate. Therefore, the upper limit of the amount of Ni is defined as 15 mass%.

### W: 9 mass% or Less

W is an element that contributes to the improvement in the wear resistance of the clad metal. When the amount of W exceeds 9 mass%, the melting point rises and the cladding properties deteriorates due to the rise of the melting point. Therefore, the upper limit of the amount of W is defined as 9 mass%.

### Fe: 30 mass% or Less

Fe is an element that contributes to the improvement in the toughness of the clad metal. When the amount of Fe exceeds 30 mass%, the corrosion resistance decreases. Therefore, upper limit of the amount of Fe is defined as 30 mass%.

### Mn: 3 mass% or Less

Mn is an element that contributes to the improvement in the cladding properties. When the amount of Mn exceeds 3 mass%, the wear resistance decreases. Therefore, the upper limit of the amount of Mn is defined as 3 mass%.

### S: 0.4 mass% or Less

S is an element that contributes to the improvement in the cladding properties (wettability) and a property that promotes discharge of blowholes. When the amount of S exceeds 0.4 mass%, solidification cracking occurs. Therefore, the upper limit of the amount of S is defined as 0.4 mass%.

While the amount of C in the cobalt-based cladding alloy described in JP 5-84592 A as above is 0.05 mass% to 3 mass%, the amount of C in the cobalt-based cladding alloy for an engine valve according to the embodiment of the present invention is 0.04 mass% or less.

Since the amount of C in the cobalt-based cladding alloy described in JP 5-84592 A is 0.05 mass% or more, hard carbide phases are likely to be generated, and as the amount of the carbide phases increases, the attackability tends to increase. An excessive increase in the attackability of the clad metal affects an increase in wear of the opponent valve seat. In addition, due to the generation of the carbides, the amount of solid solutions of Cr and Mo decreases, and the adhesion resistance or corrosion resistance tends to decrease.

Contrary to this, since the amount of C in the cobalt-based cladding alloy according to the embodiment of the present invention is 0.04 mass% or less, the attackability can be reduced, and thus it becomes possible to suppress wear of the opponent valve seat. In addition, since the amount of C is small, the generation of carbides is suppressed, and thus a reduction in the amount of solid solutions of Cr and Mo is suppressed, resulting in a cobalt-based cladding alloy provided with high corrosion resistance and adhesion resistance.

As an engine provided with the engine valve 10 having the clad portion 20, an engine to that any one of ethanol, ethanol-blended gasoline, CNG, and LPG is applied as the fuel for the engine is exemplified.

Since the engine is provided with the engine valve 10 having the clad portion 20 on which the cladding material made of the cobalt-based cladding alloy in which the amount of C is set to 0.04 mass% or less is deposited, wear of the opponent valve seat of the engine valve 10 is suppressed even in a severe corrosive environment or adhesive environment, and thus the engine has high durability.

### Experiments and Results Verifying Corrosion Resistance of Engine Valve, Wear Resistance of Engine Valve and Valve Seat, and the Like

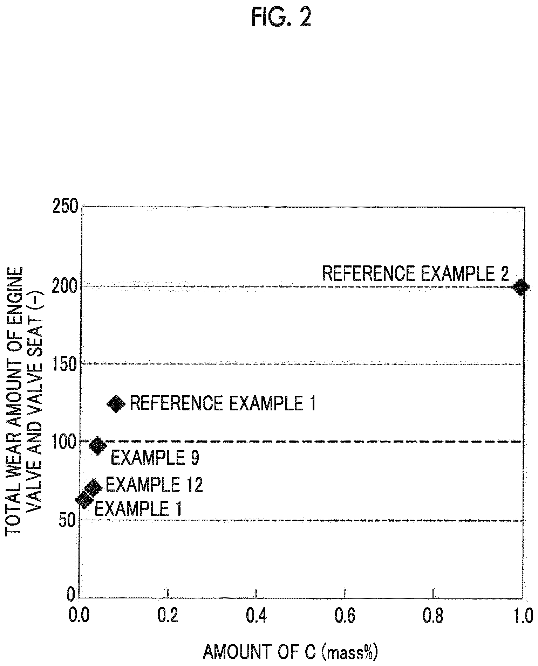

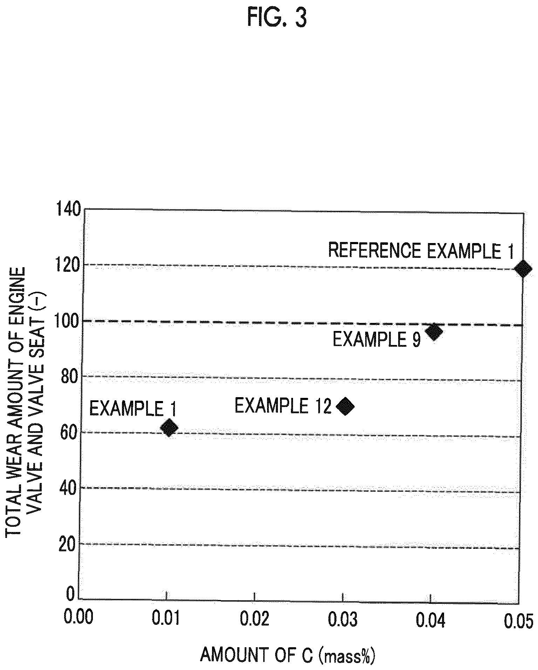

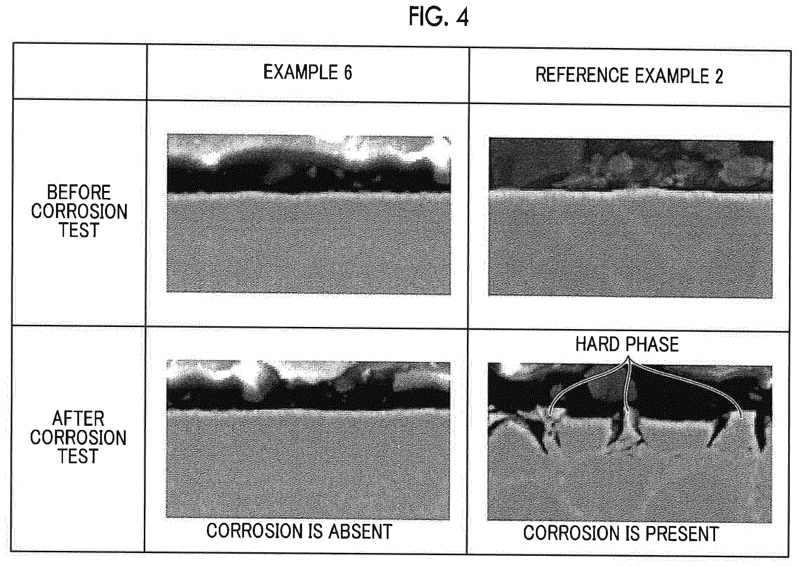

The present inventors conducted experiments to verify the corrosion resistance of the engine valve, the wear resistance of the engine valve and the valve seat, and clad beads. Table 1 below shows the composition of each of the cobalt-based cladding alloys (Examples 1 to 11) according to the embodiment of the present invention and cladding alloys of Comparative Examples 1 to 19. Table 2 shows the experimental results regarding the corrosion resistance, wear resistance, clad beads, and actual machine wear of each of the cobalt-based cladding alloys. In addition, regarding the results of a wear test, particularly the relationship between the total wear amount of the engine valve and the valve seat and the amount of C in the cobalt-based cladding alloy is shown in Tables 3-1 and 3-2 below and FIGS. 2 and 3, and an SEM image of an example and a reference example before and after a corrosion test is shown in FIG. 4. Here, Reference Examples 1 and 2 in Tables 3-1 and 3-2 refer to the cobalt-based cladding alloy disclosed in JP 5-84592 A described above. In addition, the opponent valve seat of the engine valve is a Fe-based valve seat, and is Fe-16Mo-21Co-2.4Mn-1.1C (by mass%).

First, in an experiment regarding the corrosion resistance of the engine valve, a test surface (mirror-polished surface) of a specimen having planar dimensions of 20 mm x 20 mm and a height of 2 mm was immersed in an etchant at a pH of 2.0 for 24 hours, and the cross section of the test surface was observed with SEM to check the presence or absence of corrosion on the outermost layer of the test surface.

In an experiment regarding the wear resistance, the valve face of the engine valve is clad by a plasma cladding method (output 130 A, processing speed 8 mm/sec), a single body wear test was conducted, and by using an axial wear amount of 170 µm as a threshold, a wear amount of 170 µm or more was evaluated as impossible (X) in Tables 2 and 3-2.

Here, the summary of the single body wear test will be described. This test is a test to investigate the attackability and wear resistance of the cladding material. Specifically, a sliding portion between a valve face that was clad and a valve seat made of a Cu-based material and a Fe-based sintered material was subjected to a propane gas combustion atmosphere using a propane gas burner as a heating source. The wear test was conducted for 8 hours by controlling the temperature of the valve seat to 200°C, applying a load of 176 N when the valve face and the valve seat were brought into contact with each other by a spring, and bringing the valve face and the valve seat into contact with each other at a rate of 2000 times/min. In this wear test, the depressed amount of the valve from a reference position was measured. The depressed amount of the valve corresponds to the wear amount (wear depth) to that the engine valve and the valve seat were worn by contact.

In addition, in an experiment regarding the clad beads, it was verified whether or not the cladding properties were poor and whether or not cladding can be performed on the valve face. In Tables 2, and 3-2, those on which cladding could be performed were evaluated as possible (O), and those on which cladding could not be performed were evaluated as impossible (X).

In addition, in an experiment regarding the actual machine wear, an actual machine durability test was conducted for 300 hours using a 2400 cc gasoline engine and an alcohol-containing fuel, and in Tables 2 and 3-2, the limit reference value of the wear amount (the total wear amount of the engine valve and the valve seat) is shown as 100.

**Table 1**

| | Chemical composition (mass%) | | | | | | | | |
|---|---|---|---|---|---|---|---|---|---|
| | Co | Cr | Mo | Ni | W | Si | C | Fe | Mn |
| EXAMPLE 1 | Remainder | 21 | 12 | 6 | 3 | 0.8 | 0.01 | 5 | 0.3 |
| EXAMPLE 2 | Remainder | 21 | 12 | 0 | 3 | 0.8 | 0.01 | 5 | 0.3 |
| EXAMPLE 3 | Remainder | 21 | 12 | 0 | 0 | 0.8 | 0.01 | 5 | 0.3 |
| EXAMPLE 4 | Remainder | 21 | 12 | 0 | 0 | 0.8 | 0.01 | 1 | 0.3 |
| EXAMPLE 5 | Remainder | 13 | 5 | 0 | 0 | 0.8 | 0.01 | 1 | 0.3 |
| EXAMPLE 6 | Remainder | 13 | 5 | 0 | 0 | 0.8 | 0.04 | 1 | 0.3 |
| EXAMPLE 7 | Remainder | 21 | 5 | 0 | 0 | 0.8 | 0.01 | 1 | 0.3 |
| EXAMPLE 8 | Remainder | 21 | 12 | 0 | 0 | 0.8 | 0.01 | 25 | 0.3 |
| EXAMPLE 9 | Remainder | 21 | 12 | 6 | 3 | 0.8 | 0.04 | 5 | 0.3 |
| EXAMPLE 10 | Remainder | 21 | 12 | 6 | 3 | 3.0 | 0.01 | 5 | 0.3 |
| EXAMPLE 11 | Remainder | 21 | 12 | 6 | 3 | 0.8 | 0.01 | 0 | 3.0 |
| COMPARATIVE EXAMPLE 1 | Remainder | 13 | 5 | 0 | 0 | 0.8 | 0.05 | 1 | 0.3 |
| COMPARATIVE EXAMPLE 2 | Remainder | 21 | 12 | 6 | 3 | 0.8 | *0.05* | 5 | *0.3* |
| COMPARATIVE EXAMPLE 3 | Remainder | 21 | 12 | 6 | 3 | 0.8 | 1.00 | 5 | 0.3 |
| COMPARATIVE EXAMPLE 4 | Remainder | 21 | 12 | 0 | 0 | 0.8 | 0.05 | 0 | 0.3 |
| COMPARATIVE EXAMPLE 5 | Remainder | 35 | 30 | 15 | 0 | 0.8 | 0.05 | 0 | 0.3 |
| COMPARATIVE EXAMPLE 6 | Remainder | 35 | 30 | 0 | 0 | 0.8 | 0.04 | 0 | 0.3 |
| COMPARATIVE EXAMPLE 7 | Remainder | 35 | 32 | 0 | 0 | 0.8 | 0.04 | 0 | 0.3 |
| COMPARATIVE EXAMPLE 8 | Remainder | 21 | 12 | 6 | 10 | 0.8 | 0.01 | 0 | 0.3 |
| COMPARATIVE EXAMPLE 9 | Remainder | 11 | 5 | 0 | 0 | 0.8 | 0.01 | 1 | 0.3 |
| COMPARATIVE EXAMPLE 10 | Remainder | 21 | 0 | 0 | 0 | 0.8 | 0.01 | 0 | 0.3 |
| COMPARATIVE EXAMPLE 11 | Remainder | 35 | 30 | 15 | 10 | 0.8 | 0.01 | 0 | 0.3 |
| COMPARATIVE EXAMPLE 12 | Remainder | 35 | 30 | 15 | 12 | 0.8 | 0.01 | 0 | 0.3 |
| COMPARATIVE EXAMPLE 13 | Remainder | 21 | 12 | 0 | 0 | 0.8 | 0.01 | 30 | 0.3 |
| COMPARATIVE EXAMPLE 14 | Remainder | 21 | 12 | 6 | 3 | 0.1 | 0.01 | 0 | 0.3 |
| COMPARATIVE EXAMPLE 15 | Remainder | 21 | 12 | 6 | 3 | 3.5 | 0.01 | 0 | 0.3 |
| COMPARATIVE EXAMPLE 16 | Remainder | 21 | 12 | 6 | 3 | 0.8 | 0.01 | 5 | 3.5 |
| COMPARATIVE EXAMPLE 17 (Stellite 6) | 26 | Remainder | 27 | - | - | 5 | - | 1.3 | 0.3 |
| COMPARATIVE EXAMPLE 18 (SUH35) | 27 | - | 21 | - | 3.8 | - | - | 0.5 | 0.3 |
| COMPARATIVE EXAMPLE 19 (SUH35 nitriding) | 28 | - | - | - | - | - | - | - | 0.3 |

**Table 2**

| | Corrosion resistance | Wear resistance | | | | Clad beads | Actual machine wear |
|---|---|---|---|---|---|---|---|
| | | Axial wear amount (µm) | | | | | |
| | | Determination | Engine valve | Valve seat a | Total amount | | |
| EXAMPLE 1 | O | O | 4 | 29 | 33 | O | 62 |
| EXAMPLE 2 | O | O | 2 | 26 | 28 | O | Not conducted |
| EXAMPLE 3 | O | O | 7 | 34 | 41 | O | Not conducted |
| EXAMPLE 4 | O | O | 10 | 50 | 60 | O | Not conducted |
| EXAMPLE 5 | O | O | 42 | 72 | 114 | O | Not conducted |
| EXAMPLE 6 | O | O | 37 | 81 | 118 | O | Not conducted |
| EXAMPLE 7 | O | O | 50 | 80 | 130 | O | Not conducted |
| EXAMPLE 8 | O | O | 13 | 34 | 47 | O | Not conducted |
| EXAMPLE 9 | O | O | 3 | 32 | 35 | O | 97 |
| EXAMPLE 10 | O | O | 46 | 112 | 158 | O | Not conducted |
| EXAMPLE 11 | O | O | 10 | 158 | 168 | O | Not conducted |
| COMPARATIVE EXAMPLE 1 | X | O | 45 | 71 | 116 | O | Not conducted |
| COMPARATIVE EXAMPLE 2 | X | O | 4 | 47 | 51 | O | 100 or more |
| COMPARATIVE EXAMPLE 3 | X | O | 2 | 55 | 57 | O | 100 or more |
| COMPARATIVE EXAMPLE 4 | X | O | 5 | 45 | 50 | O | Not conducted |
| COMPARATIVE EXAMPLE 5 | X | O | Not conducted | | | X | Not conducted |
| COMPARATIVE EXAMPLE 6 | O | O | Not conducted | | | X | Not conducted |
| COMPARATIVE EXAMPLE 7 | O | O | Not conducted | | | X | Not conducted |
| COMPARATIVE EXAMPLE 8 | O | O | Not conducted | | | X | Not conducted |
| COMPARATIVE EXAMPLE 9 | X | O | 40 | 66 | 104 | O | Not conducted |
| COMPARATIVE EXAMPLE 10 | X | X | 96 | 92 | 203 | O | Not conducted |
| COMPARATIVE EXAMPLE 11 | O | O | Not conducted | | | X | |
| COMPARATIVE EXAMPLE 12 | Not conducted | Not conducted | Not conducted | | | X | |
| COMPARATIVE EXAMPLE 13 | X | O | 20 | 23 | 43 | O | Not conducted |
| COMPARATIVE EXAMPLE 14 | Not conducted | Not conducted | Not conducted | | | X | Not conducted |
| COMPARATIVE EXAMPLE 15 | O | X | 7 | 230 | 237 | O | Not conducted |
| COMPARATIVE EXAMPLE 16 | O | X | 50 | 130 | 180 | O | Not conducted |
| COMPARATIVE EXAMPLE 17 (Stellite 6) | X | X | 120 | 105 | 225 | O | X (100 or more for a time of 1/10) |
| COMPARATIVE EXAMPLE 18 (SUH35) | X | X | 130 | 111 | 241 | - | Not conducted |
| COMPARATIVE EXAMPLE 19 (SUH35 nitriding) | X | O | 2 | 41 | 43 | - | X (100 or more for a time of 1/10) |

**Table 3-1**

| | Chemical composition (mass%) | | | | | | | | |
|---|---|---|---|---|---|---|---|---|---|
| | Co | Cr | Mo | Ni | W | Si | C | Fe | Mn |
| EXAMPLE 1 | Remainder | 21 | 12 | 6 | 3 | 0.8 | 0.01 | 5 | 0.3 |
| EXAMPLE 12 | Remainder | 21 | 12 | 6 | 3 | 0.8 | 0.03 | 5 | 0.3 |
| EXAMPLE 9 | Remainder | 21 | 12 | 6 | 3 | 0.8 | 0.04 | 5 | 0.3 |
| REFERENCE EXAMPLE 1 | Remainder | 21 | 12 | 6 | 3 | 0.8 | 0.05 | 1 | 0.3 |
| REFERENCE EXAMPLE 2 | Remainder | 21 | 12 | 6 | 3 | 0.8 | 1.00 | 1 | 0.3 |
| COMPARATIVE EXAMPLE 17 (Stellite 6) | 26 | Remainder | 27 | - | - | 5 | - | 1.3 | 0.3 |
| COMPARATIVE EXAMPLE 19 (SUH35 nitriding) | 28 | - | - | - | - | - | - | - | 0.3 |

**Table 3-2**

| | Corrosion resistance | Wear resistance | | | | Clad beads | Actual machine wear |
|---|---|---|---|---|---|---|---|
| | | Axial wear amount (µm) | | | | | |
| | | Determination | Engine valve | valve seat | Total amount | | |
| EXAMPLE 1 | O | O | 4 | 29 | 33 | O | 62 |
| EXAMPLE 12 | O | O | 9 | 38 | 47 | O | 70 |
| EXAMPLE 9 | O | O | 3 | 32 | 35 | O | 97 |
| REFERENCE EXAMPLE 1 | X | O | 6 | 37 | 43 | O | 100 or more |
| REFERENCE EXAMPLE 2 | X | O | 3 | 30 | 33 | O | 100 or more |
| COMPARATIVE EXAMPLE 17 (Stellite 6) | X | X | 120 | 105 | 225 | O | X |
| | | | | | | | 100 or more for a time of 1/10 |
| COMPARATIVE EXAMPLE 19 (SUH35 nitriding) | X | O | 2 | 41 | 43 | O | X |
| | | | | | | | 100 or more for a time of 1/10 |

**Table 4-1**

| | Chemical composition (mass%) | | | | | | | | | |
|---|---|---|---|---|---|---|---|---|---|---|
| | Co | Cr | Mo | Ni | W | Si | C | Fe | Mn | S |
| EXAMPLE 13 | Remainder | 21 | 12 | 6 | 3 | 0.8 | 0.01 | 5 | 0.3 | 0.1 |
| EXAMPLE 14 | Remainder | 21 | 12 | 6 | 3 | 0.8 | 0.01 | 5 | 0.3 | 0.4 |
| COMPARATIVE EXAMPLE 20 | Remainder | 21 | 12 | 6 | 3 | 0.8 | 0.01 | 5 | 0.3 | 0.5 |

**Table 4-2**

| | Corrosion resistance | Wear resistance | | | | Clad beads |
|---|---|---|---|---|---|---|
| | | Axial wear amount (µm) | | | | |
| | | Determination | Engine valve | Valve seat | Total amount | |
| EXAMPLE 13 | O | O | 12 | 43 | 55 | O |
| EXAMPLE 14 | O | O | 13 | 41 | 54 | O |
| COMPARATIVE EXAMPLE 20 | Not conducted | | | | | X (solidification cracking) |

From Table 2, it could be seen that all of Examples 1 to 11 are excellent in corrosion resistance, wear resistance, and cladding properties.

Regarding the actual machine wear, in any of Examples 1 and 9 as the experimental objects, the limit reference value of the wear amount was less than 100, and good results are shown.

In contrast, in each of the comparative examples, any of corrosion resistance, wear resistance, and cladding properties is not satisfied. In any of Comparative Examples 2 and 3 as the experimental objects of the actual machine wear experiment, the result of the limit reference value of the wear amount is 100 or more.

In addition, it can be seen from Tables 3-1 and 3-2 and FIGS. 2 and 3, while the result of the limit reference value of the wear amount is 100 or more in any of Reference Examples 1 and 2 (the cobalt-based cladding alloy disclosed in JP 5-84592 A) in which the amount of C is 0.05 mass% or more, in any of Examples 1, 9, and 12 in which the amount of C is 0.04 mass% or less, the limit reference value of the wear amount is lower than 100 and good results are shown.

It can be seen from FIG. 4 that, in the SEM image before and after the corrosion test, while hard phases are formed after the corrosion test and corrosion is confirmed in Reference Example 2, in Example 6, no corrosion is observed before and after the corrosion test.

Furthermore, it can be seen from Tables 4-1 and 4-2 that while any of Examples 13 and 14 in which the amount of C is 0.04 mass% or less and the amount of S is 0.4 mass% or less is excellent in corrosion resistance, wear resistance, and cladding properties, in Comparative Example 20 in which the amount of S is 0.5 mass% or more, solidification cracking occurs, and it is confirmed that there is a problem in cladding properties.

While the embodiment of the present invention has been described in detail with reference to the drawings, the specific configurations are not limited to the embodiment, and design changes and the like without departing from the gist of the present invention are also included in the present invention.

## Claims

1. A cobalt-based cladding alloy for an engine valve (10) comprising, by mass%:
Cr: 13% to 35%;
Mo: 5% to 30%;
Si: 0.1 % to 3.0%;
C: 0.04% or less;
Ni: 15% or less;
W: 9% or less;
Fe: 30% or less;
Mn: 3% or less;
S: 0.4% or less; and
Co and inevitable impurity elements as a remainder,
wherein an amount of Co is 30% or more.

2. An engine comprising:
an engine valve (10) on which a cladding material made of the cobalt-based cladding alloy according to claim 1 is deposited,
wherein a fuel for the engine is any one of ethanol, ethanol-blended gasoline, compressed natural gas, and liquefied petroleum gas.
